Europäisches Patentamt

**European Patent Office**

Office européen des brevets

(11) Veröffentlichungsnummer: **0 045 518**
**B1**

(12) **EUROPÄISCHE PATENTSCHRIFT**

(45) Veröffentlichungstag der Patentschrift:
22.02.84

(21) Anmeldenummer: 81106135.7

(22) Anmeldetag: 05.08.81

(51) Int. Cl.³: **C 04 B 35/58**

(54) Dichter, Yttriumoxid enthaltender Formkörper aus Siliziumnitrid und Verfahren zu seiner Herstellung.

(30) Priorität: 06.08.80 **DE 3029831**
06.08.80 **DE 3029832**

(43) Veröffentlichungstag der Anmeldung:
10.02.82 Patentblatt 82/6

(45) Bekanntmachung des Hinweises auf die Patenterteilung:
22.02.84 Patentblatt 84/8

(84) Benannte Vertragsstaaten:
**DE FR GB IT NL SE**

(56) Entgegenhaltungen:
**WO - A - 80/00080
DE - A - 2 801 474
DE - B - 2 412 637**

**Chemical Abstracts Band 86, 1977 Columbus, Ohio, USA
O. UEGAKIGAI et al. "Silicon nitride sintering" Seite
248, Abstract Nr. 193996m
Chemical Abstracts Band 91, 1979 Columbus, Ohio, USA
K. NISHIDA et al. "Sintered ceramic product with
improved heat resistance" Seite 284, Abstract Nr.
127903f
AMERICAN CERAMIC SOC. BULLETIN, Band 59, Nr. 12,
Dezember 1980 Columbus, Ohio, USA J.A. MANGELS et
al. "Densification of Reaction-Bonded Silicon Nitride"
Seiten 1216 bis 1222**

(73) Patentinhaber: **Feldmühle Aktiengesellschaft,
Fritz-Vomfelde-Platz 4, D-4000 Düsseldorf 11 (DE)**

(72) Erfinder: **Steinmann, Detlef, Dipl.-Ing., Sonnenleite 25,
D-8633 Rödental (DE)**

(74) Vertreter: **Uhlmann, Hans, Dr. rer.nat., Dipl.-Chem. et al,
Gladbacher Strasse 189, D-4060 Viersen 1 (DE)**

# 0 045 518

## Dichter, Yttriumoxid enthaltender Formkörper aus Siliziumnitrid und Verfahren zu seiner Herstellung

Die Erfindung bezieht sich auf einen dichten, Yttriumoxid und Aluminiumoxid enthaltenden Formkörper aus gesintertem und/oder bei hohen Temperaturen gepreßtem Siliziumnitrid und richtet sich ferner auf ein Verfahren zur Herstellung solcher dichten Formkörper.

Formkörper aus Siliziumnitrid zeichnen sich insbesondere durch hohe Festigkeit bei Raumtemperatur bis zu 1400°C aus, besitzen eine ausgezeichnete Kriechbeständigkeit und weisen in jedem Temperaturbereich, und zwar bis 1400°C, eine hervorragende Oxidationsbeständigkeit und Temperaturwechselbeständigkeit auf. Sie eignen sich dadurch als Konstruktionsteile, die hohen Temperaturen und korrosiver Atmosphäre ausgesetzt sind. Besonders interessant ist Siliziumnitrid auch als Werkstoff für dynamisch hochbeanspruchte Teile in Gasturbinen.

Für das Sintern oder Pressen bei hohen Temperaturen von Formkörpern aus dichtem Siliziumnitrid ist die Beigabe sinterfördernder Zusätze erforderlich, um hohe Dichten zu erzielen, die sich der theoretischen Dichte annähern.

Aus der US-A-4 102 698 ist es bekannt, als sinterförderndes Mittel $Y_2O_3$ in Mengen zwischen 1 und 25 Gew.-% zuzugeben, wobei zur Vermeidung von Instabilitäten im mittleren Temperaturbereich zwischen 800 und 1100°C und damit verbundenen starken Volumen- und Gewichtszunahmen sowie Rißbildungen ein sehr reines Siliziumnitridpulver verwendet werden muß, mit Kationverunreinigungen von weniger als 0,1% bis maximal 1% in Form von Oxiden sowie definiertem Sauerstoffgehalt und genauester Zusammensetzung. Da schwankende Rohstoffzusammensetzungen praktisch unvermeidbar sind, ist eine redproduzierende Materialherstellung nach diesem Verfahren nur im Labormaßstab möglich. Ähnliches gilt auch für die aus der DE-A-2 718 729 und der DE-A-2 937 740 bekannt gewordenen Lehren.

Die Herstellung von Yttriumoxid enthaltenden Siliziumnitridformkörpern durch druckloses Sintern anstelle durch Heißpressen ist aus WO-A 80/00080 Seite 7, Zeilen 14 bis 15 bekannt und die Zugabe von Zusätzen in Oxidform oder in Form Oxide bildender Verbindungen zu einem Siliziumpulver vor der Nitrierung aus der DE-B-2 412 637. Auch mit diesen Verfahren ist jedoch eine reproduzierbare Materialherstellung in größerem Maßstabe nicht möglich.

Hier will die Erfindung Abhilfe schaffen. Die Erfindung, wie sie in den Ansprüchen gekennzeichnet ist, löst die Aufgabe, dichte Siliziumnitridkörper mit einem Anteil an Yttriumoxid und Aluminiumoxid zu schaffen, und ein Verfahren zu deren Herstellung zu entwickeln, bei denen die Materialeigenschaften sowohl bei Raumtemperatur als auch bei höheren Temperaturen im Kurzzeit- wie auch im Langzeitverhalten durch Oxidation keine drastische Verschlechterung erfahren und die Reproduzierbarkeit gewährleistet ist.

Der durch die Erfindung erreichte besondere Vorteil liegt darin, daß es durch gezielten Zusatz weiterer Bestandteile zum Versatz möglich ist, zu Materialeigenschaften zu kommen, die durch schwankende Rohstoffzusammensetzung und Analysenschwankungen nicht mehr wesentlich beeinflußt werden.

Bei der Zugabe von $Al_2O_3$ und $Fe_2O_3$ müssen nicht nur deren prozentuale Anteile in den Grenzen von

0,2 bis 2,0 Gew.-% $Al_2O_3$ und
0,2 bis 2,0 Gew.-% $Fe_2O_3$

exakt eingehalten werden, sondern es muß auch streng darauf geachtet werden, daß der Kohlenstoffanteil des dichten Körpers nicht mehr als 0,4 Gew.-% beträgt. Dies bedeutet, daß entweder der Kohlenstoffanteil im Versatz weit unter dem genannten Prozentsatz liegen muß und/oder beim Verdichten darauf zu achten ist, daß praktisch kein Kohlenstoff in den Formkörper eindiffundieren kann. Unter Verdichten ist dabei sowohl Heißpressen als auch Sintern zu verstehen.

In der DE-A-2 801 474 und WO-A 80/00080 sind zwar bei einem $Si_3N_4$-Material neben $Y_2O_3$ auch $Al_2O_3$ und $Fe_2O_3$-Gehalte angegeben. Diese Gehalte sind bei der in diesen Literaturstellen angegebenen Zielsetzung nicht kritisch. Für die Zwecke der Erfindung sind sie jedoch störend und ihre nachteilige Wirkung läßt sich nur dadurch ausschalten, daß streng auf den nach der Erfindung erlaubten maximalen Kohlenstoffgehalt von 0,4 Gew.-% geachtet wird.

Im folgenden wird die Erfindung anhand von Ausführungsbeispielen näher erläutert.

Die einzige Zeichnungsfigur dient der Erläuterung eines Prüfzyklus, der in Tabelle 4 wiedergegeben ist.

## Beispiel

Als Ausgangsmaterial wird im allgemeinen vollständig kristallines Siliziumnitridpulver verwendet, jedoch kann auch amorphes Material, das durch eine Temperaturbehandlung teilweise kristallisiert worden ist, oder eine Mischung aus amorphen und kristallinen Siliziumnitrid als Ausgangsmaterial zum Einsatz kommen. Bei diesem Ausführungsbeispiel ist darauf zu achten, daß bei der Wahl des

2

Siliziumnitridpulvers bzw. bei der eigenen Herstellung des Siliziumnitridpulvers der Gesamtkohlenstoffgehalt des Siliziumnitridpulvers 0,4 Gew.-% nicht übersteigt. Bei der eigenen Herstellung ist dafür die Auswahl des Siliziumnitridpulvers und die Verwendung von kohlenstofffreien Nitrideröfen zu beachten. Liegt der Kohlenstoffgehalt des Siliziumnitridpulvers in der Größenordnung von 0,4 Gew.-%, so muß beispielsweise beim Sintern oder Heißpressen ein weiteres Eindiffundieren von Kohlenstoff aus dem Heizleiter bzw. aus den Matrizen vermieden werden, damit der Gesamtkohlenstoffgehalt im fertigen Formkörper nicht über 0,4 Gew.-% ansteigt.

Man kann dies beispielsweise durch Einkapseln in Glas bzw. Bornitrid erreichen. Ferner wird man bei der Wahl des kristallinen Siliziumnitridpulvers zur Erzielung guter Eigenschaften in der Regel ein Pulver auswählen, von dem sich möglichst mehr als 90% in der $\alpha$-Phase befindet und dessen Verunreinigungen an CaO, MgO, Na$_2$O möglichst gering sind, d. h. bei CaO und MgO unter 0,1% und bei Na$_2$O unter 0,05% liegen. Dem derart ausgewählten Si$_3$N$_4$-Material wird nunmehr nicht nur Yttriumoxid in Mengen von 1 bis 20 Gew.-% zugesetzt, sondern es werden auch noch 0,2 bis 2% Fe$_2$O$_3$ und 0,2 bis 2% Al$_2$O$_3$ bzw. Verbindungen zugesetzt, die sich bei Temperaturerhöhung in die entsprechenden Oxide verwandeln. Damit erhält man durch Zugabe leicht verfügbarer Materialien neben der Zugabe von Yttriumoxid, dessen günstige Wirkungen bereits bekannt sind, ein Produkt, das optimale Eigenschaften sowohl bei Raumtemperatur als auch bei höheren Temperaturen im Kurzzeitwie auch im Langzeitverfahren aufweist, durch Oxidation keine drastischen Verschlechterungen erfährt und in jeder Beziehung reproduzierbar ist.

Die Verfahrensführung kann so gewählt werden, daß beispielsweise das ausgewählte Si$_3$N$_4$-Material mit dem Yttriumoxid, Eisenoxid und Aluminiumoxid bzw. Verbindungen, die sich in die entsprechenden Oxide umwandeln, versetzt und gemischt und unter Zuhilfenahme einer Mahlflüssigkeit, beispielsweise Methanol, Toluol, Cyclohexan u. dgl. aufgemahlen wird, um eine reaktive Pulvermischung zu erhalten. Dabei ist eine spezifische Oberfläche nach der BET-Methode von > 3 m$^2$/g anzustreben, wobei sich eine gleichmäßige Kornverteilung mit einer maximalen Korngröße von 20 µm als vorteilhaft erweist.

Die aufgemahlene Aufschlämmung wird z. B. beim Heißpressen nach dem Trocknen und Absieben in die entsprechende Graphitmatrize eingefüllt, mit vorzugsweise 10 bis 20 N/mm$^2$ vorgepreßt und dann bei einem Druck von vorzugsweise 20 bis 60 N/mm$^2$ in einer Schutzgasatmosphäre, im allgemeinen Stickstoff, oder unter Vakuum bei Temperaturen von vorzugsweise 1700 bis 1800°C heißgepreßt. Die Haltezeit bei Druck- und Temperaturkonstanz beträgt 1 bis 2 Stunden. Man erhält auf diese Weise im wesentlichen vollständig verdichtete Si$_3$N$_4$-Körper. Es hat sich gezeigt, daß auf diese Weise hergestellte Formkörper Eigenschaften aufweisen, die diejenigen wesentlich übersteigen, die die bekannten yttriumoxidhaltigen Siliziumnitridkörper besitzen. Man vermeidet durch die Erfindung die bei Yttriumoxid enthaltenden Siliziumnitridkörpern bekannten Nachteile, die durch Instabilität der Korngrenzenphase im mittleren Temperaturbereich zwischen 800 und 1100°C auftreten. Die neuen Körper zeigen keine Volumenzunahme, keine Rißbildung und keine drastische Gewichtszunahme durch Oxidation und damit auch keinen unüblichen Festigkeitsabfall in diesem Temperaturbereich, keinen unüblichen Abfall der Raumtemperaturfestigkeit nach dem Glühen sowie keinen unüblichen Abfall der Raumtemperaturfestigkeit nach einem TWB-Test.

An verschiedenen, in dieser Weise hergestellten Materialien wurden Biegefestigkeiten an aus dem Si$_3$N$_4$-Körper herausgearbeiteten Biegeproben mit Abmessungen von 3,5 × 4,5 × 45 mm bestimmt und in einer 4-Punkt-Biegeanordnung mit den Stützabständen 10 − 20 − 10 mm zwischen Raumtemperatur und 1400°C, mit einer Prüfgeschwindigkeit von 0,1 mm pro Minute, ermittelt.

3

Tabelle 1

Gewichtszunahme und Materialveränderung durch Oxidation

| Temperatur [°C] | $Si_3N_4$ 11% $Y_2O_3$+1,4% $Fe_2O_3$ +1,2% $Al_2O_3$+0,19% C (erfindungsgemäßes Material) Gewichtszunahme nach 100 h Glüh- dauer [g/m²] | 11% $Y_2O_3$+0,06% $Fe_2O_3$ +0,09% $Al_2O_3$+0,51% C Gewichtszunahme nach 100 h Glüh- dauer [g/m²] |
|---|---|---|
| 500 | 0,121 | 1,53 |
| 600 | 0,122 | 1,58 |
| 700 | 0,125 | 1,67 |
| 800 | 0,129 | 2,41 |
| 900 | 0,135 | 3,56 |
| 1000 | 0,134 | 5,29 |
| 1100 | 0,139 | 3,28 |
| 1200 | 0,146 | 1,46 |

| | Materialveränderung nach 24 h Glüh- dauer bei 1000°C [%] | | Materialveränderung nach 24 h Glüh- dauer bei 1000°C [%] | |
|---|---|---|---|---|
| | vorher | nachher | vorher | nachher |
| $\beta$-$Si_3N_4$ | 72 | → 72 | 71 | → 57 |
| N | 32,23 | → 32,19 | 32,54 | → 30,22 |
| O | 2,36 | → 2,43 | 1,89 | → 4,38 |
| C | 0,19 | → 0,18 | 0,51 | → 0,56 |

0 045 518

Tabelle 2

Biegefestigkeit in Abhängigkeit von der Temperatur

| Temperatur [° C] | $Si_3N_4$ 8% $Y_2O_3$+1,00% $Fe_2O_3$ +0,60% $Al_2O_3$+0,26% C (erfindungsgemäßes Material) | 8% $Y_2O_3$+0,06% $Fe_2O_3$ +0,09% $Al_2O_3$+0,51% C |
|---|---|---|
| | Biegefestigkeit [N/mm²] | Biegefestigkeit [N/mm²] |
| 20 | 792 | 798 |
| 800 | 756 | 761 |
| 900 | 734 | 694 |
| 1000 | 692 | 512 |
| 1100 | 677 | 536 |
| 1200 | 666 | 642 |
| 1300 | 595 | 583 |
| 1400 | 533 | 496 |

Tabelle 3

Raumtemperaturfestigkeit nach jeweils 24 h Glühdauer
(Material siehe Tabelle 2)

| Temperatur [° C] | Biegefestigkeit bei 20° C [N/mm²] (erfindungsgemäßes Material) | Biegefestigkeit bei 20° C [N/mm²] (Vergleichsmaterial) |
|---|---|---|
| 800 | 801 | 809 |
| 900 | 782 | 674 |
| 1000 | 776 | 512 |
| 1100 | 754 | 632 |
| 1200 | 736 | 681 |

Tabelle 4

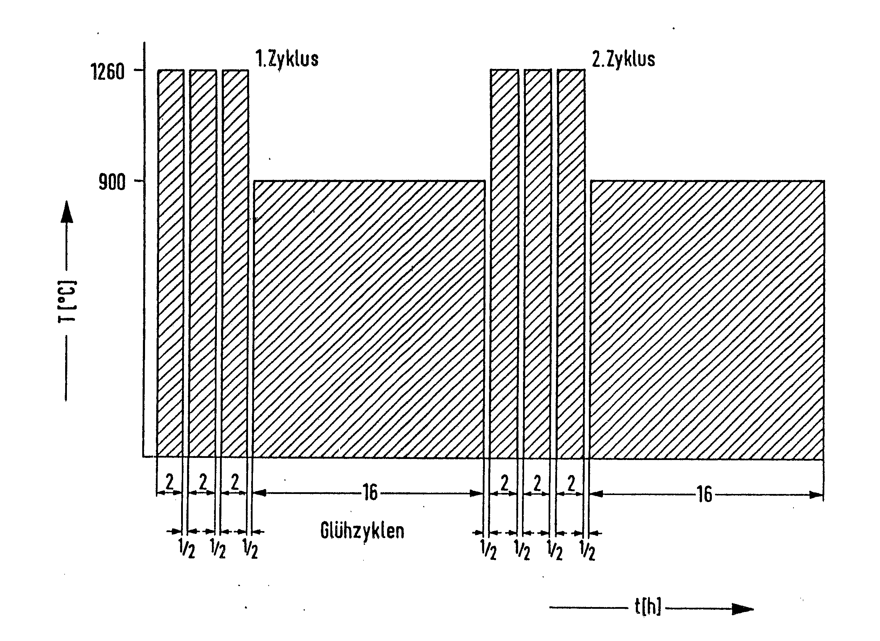

Raumtemperaturfestigkeit der in Tabelle 1 genannten Materialien nach einem TWB-Test (Bild 1) — nach jedem Glühen Abschrecken an Luft auf Raumtemperatur

| | erfindungsgemäßes Material | Vergleichsmaterial |
| --- | --- | --- |
| Ausgangsfestigkeit bei Raumtemperatur [N/mm$^2$] | 787 | 784 |
| Raumtemperaturfestigkeit [N/mm$^2$] nach | | |
| 1 × 1260° C | 754 | 621 |
| 2 × 1260° C | 771 | 630 |
| 3 × 1260° C | 757 | 613 |
| 3 × 1260° C + 1 × 900° C (1 Zyklus) | 732 | 404 |
| 5 Gesamtzyklen | 709 | 338 |

Für den Temperaturwechselbeständigkeitstest wurde ein Prüfzyklus (vgl. Zeichnung) benutzt, der für die Untersuchung von herkömmlichen Gasturbinenbauteilen üblich ist.

Tabelle 5

Einfluß der Zusätze und des C-Gehaltes auf die Biegefestigkeit bei 1000° C und die Raumtemperatur-Biegefestigkeit ($\sigma_{RT}$) nach 24 h Glühdauer bei 1000° C

| $Al_2O_3$ | $Fe_2O_3$ | $Y_2O_3$ | C | $\sigma$ 1000° C | $\sigma_{RT}$ (24 h bei 1000° C) |
|---|---|---|---|---|---|
| % | % | % | % | [N/mm$^2$] | [N/mm$^2$] |

Vergleichsbeispiele

| 0,15 | 0,15 | 8,00 | 0,57 | 483 | 576 |
| 0,20 | 0,15 | 8,00 | 0,57 | 514 | 543 |
| 0,20 | 0,20 | 8,00 | 0,57 | 521 | 551 |
| 0,15 | 0,20 | 8,00 | 0,57 | 505 | 526 |
| 0,15 | 0,15 | 8,00 | 0,28 | 527 | 583 |

Beispiele nach der Erfindung

| 0,20 | 0,20 | 8,00 | 0,28 | 721 | 721 |
| 0,50 | 0,50 | 8,00 | 0,28 | 701 | 712 |
| 1,00 | 1,00 | 8,00 | 0,28 | 692 | 781 |
| 1,50 | 1,50 | 8,00 | 0,28 | 714 | 794 |
| 2,00 | 2,00 | 8,00 | 0,28 | 685 | 703 |

Vergleichsbeispiele

| 2,50 | 2,50 | 8,00 | 0,28 | 556 | 604 |
| 2,50 | 2,00 | 8,00 | 0,28 | 531 | 627 |
| 2,00 | 2,50 | 8,00 | 0,28 | 507 | 594 |
| 2,50 | 2,50 | 8,00 | 0,57 | 513 | 583 |

**Patentansprüche**

1. Dichter, Yttriumoxid und Aluminiumoxid enthaltender Formkörper aus gesintertem und/oder bei hohen Temperaturen gepreßtem Siliziumnitrid, gekennzeichnet durch einen Gehalt, bezogen auf die Gesamtmenge aller Bestandteile, an

0,2 bis 2,0 Gew.-% $Al_2O_3$ und
0,2 bis 2,0 Gew.-% $Fe_2O_3$
und nicht mehr als 0,4 Gew.-% Kohlenstoff.

2. Verfahren zur Herstellung von dichten Formkörpern aus Siliziumnitrid durch Sintern und/oder Pressen bei hohen Temperaturen unter Zusatz von Yttriumoxid und Aluminiumoxid oder einer bei Temperaturerhöhung Yttriumoxid bzw. Aluminiumoxid bildenden Yttrium- bzw. Aluminiumverbindung, dadurch gekennzeichnet, daß von einem Versatz aus

76,0 bis 98,6 Gew.-% $Si_3N_4$
1,0 bis 20,0 Gew.-% $Y_2O_3$
0,2 bis 2,0 Gew.-% $Fe_2O_3$
0,2 bis 2,0 Gew.-% $Al_2O_3$

bzw. aus den die entsprechenden Oxide bildenden Verbindungen ausgegangen wird, wobei die Versatzmaterialien und die Verfahrensführung so gewählt werden, daß im fertigen Körper der Kohlenstoffgehalt 0,4% nicht übersteigt.

3. Verfahren nach Anspruch 2, dadurch gekennzeichnet, daß dem zur Herstellung des Siliziumnitridpulvers verwendeten Siliziumpulver vor der Nitridierung das Yttriumoxid, das Eisenoxid und das Aluminiumoxid oder sie jeweils bildende Verbindungen in Pulverform zugesetzt werden.

**Claims**

1. Shaped article which contains one or more densifying agents, yttrium oxide and aluminium oxide and comprises sintered silicon nitride and/or silicon nitride which has been compressed at high temperature, characterised in that it contains, based on the total amount of all its constituents,

from 0.2 to 2.0% by weight of $Al_2O_3$ and
from 0.2 to 2.0% by weight of $Fe_2O_3$
and not more than 0.4% by weight of carbon.

2. Process for the manufacture of dense shaped articles from silicon nitride by means of sintering and/or compression at high temperature with the addition of yttrium oxide and aluminium oxide or an yttrium or aluminium compound which forms yttrium oxide or aluminium oxide, respectively, when the temperature is increased, characterised in that the starting material is a mixture of

from 76.0 to 98.6% by weight of $Si_3N_4$
from 1.0 to 20,0% by weight of $Y_2O_3$
from 0,2 to 2.0% by weight of $Fe_2O_3$ and
from 0.2 to 2.0% by weight of $Al_2O_3$

or of compounds forming the corresponding oxides, the materials in the mixture being so selected and the process being so conducted that the carbon content of the finished article does not exceed 0.4%.

3. Process according to claim 2, characterised in that the yttrium oxide, the iron oxide and the aluminium oxide, or the corresponding precursor compound(s) are each added in powder form to the silicon powder used to manufacture the silicon nitride powder, before conversion to the nitride takes place. —

**Revendications**

1. Corps moulé dense en nitrure de silicium fritté et/ou compacté à hautes températures, contenant de l'oxyde d'yttrium et de l'oxyde d'aluminium, caractérisé par une teneur, rapportée à la quantité totale de tous les constituants, de:

0,2 à 2,0% en poids de $Al_2O_3$ et
0,2 à 2,0% en poids de $Fe_2O_3$
et pas plus de 0,4% en poids de carbone.

2. Procédé de préparation de corps moulés denses en nitrure de silicium par frittage et/ou pressage à hautes températures avec addition d'oxyde d'yttrium et d'oxyde d'aluminium ou d'un composé d'yttrium ou d'aluminium donnant naissance, par élévation de température, à de l'oxyde d'yttrium ou de l'oxyde d'aluminium, caractérisé par le fait que l'on part d'une charge constituée par:

76,0 à 98,6% en poids de $Si_3N_4$
1,0 à 20,0% en poids de $Y_2O_3$
0,2 à 2,0% en poids de $Fe_2O_3$
0,2 à 2,0% en poids de $Al_2O_3$

ou de composés donnant naissance aux oxydes correspondants, les matériaux de la charge et la conduite du procédé étant choisis de telle sorte que, dans le corps terminé, la teneur en carbone ne dépasse pas 0,4%.

3. Procédé selon la revendication 2, caractérisé par le fait que l'on ajoute à la poudre de silicium utilisée pour la préparation de la poudre de nitrure de silicium, avant la nitruration, l'oxyde d'yttrium, l'oxyde de fer et l'oxyde d'aluminium ou les composés leur donnant naissance respectivement, sous forme de poudre.